# NEUE EUROPÄISCHE PATENTSCHRIFT

(11) **EP 1 216 870 B2**
(45) Veröffentlichungstag und Bekanntmachung des Hinweises auf die Entscheidung über den Einspruch: **27.10.2010**
(45) Hinweis auf die Patenterteilung: 12.07.2006
(21) Anmeldenummer: 01129048.3
(22) Anmeldetag: 07.12.2001
(51) Int. Cl.: B60J 7/22

(54) **Windschutzvorrichtung für ein Kraftfahrzeug**
Wind deflector for motor vehicle
Déflecteur de vent pour véhicule automobile

(30) Priorität: 21.12.2000 DE 10063770
(43) Veröffentlichungstag der Anmeldung: 26.06.2002
(73) Patentinhaber: Daimler AG, 70327 Stuttgart (DE)
(72) Erfinder: Gloss, Bernhard, 74336 Brackenheim (DE)

(56) Entgegenhaltungen:
- EP-A- 0 394 675
- WO-A-97/04976
- DE-A- 19 502 793
- DE-A- 19 616 448
- DE-A1- 3 836 375
- DE-A1- 4 235 416
- DE-A1- 19 714 938
- DE-C- 4 311 240
- DE-C2- 3 844 844
- DE-U1- 9 303 717

## Beschreibung

Die Erfindung betrifft eine Windschutzvorrichtung für ein Kraftfahrzeug, insbesondere für einen offenen Personenkraftwagen, mit den Merkmalen des Oberbegriffs des Anspruchs 1.

Aus der DE 197 09 602 A1 ist eine Windschutzvorrichtung bekannt, die einen Unterrahmen besitzt, der mit Befestigungsmitteln am Fahrzeug befestigbar ist. Ein Oberrahmen dieser Windschutzvorrichtung ist um eine Schwenkachse am Unterrahmen schwenkbar gelagert, wobei diese Schwenkachse im Einbauzustand der Windschutzvorrichtung etwa quer zur Fahrzeuglängsrichtung verläuft. Die beiden Rahmen sind jeweils allseitig geschlossen ausgebildet und tragen jeweils ein flexibles, flächiges Windschutzelement in Form eines Gitters oder Netzes.

Bei einem offenen Personenkraftwagen, also bei einem Cabriolet, wird eine solche Windschutzvorrichtung hinter einer Frontsitzreihe des Cabriolets etwa auf der Höhe des oberen Endes der Rückenlehnen montiert. Der Unterrahmen kann dabei einen hinten an die Frontsitzreihe anschließenden Stauraum bedecken. In einer Ablegeposition ist der Oberrahmen nach hinten geklappt; in einer Aufstellposition ist der Oberrahmen nach oben geklappt, wodurch das vom Oberrahmen aufgespannte Netz hinter den Kopfstützen der Frontsitzreihe positioniert wird. In dieser Aufstellposition ergibt sich für die Passagiere der Frontsitzreihe ein effektiver Windschutz.

Aus der DE 195 02 794 A1 geht eine gattungsgemäße Windschutzvorrichtung hervor, welche einen Unterrahmen aufweist, der mit Hilfe von Befestigungsmitteln am Fahrzeug befestigbar ist. Des Weiteren ist ein am Unterrahmen schwenkbar gelagerter Oberrahmen vorgesehen, der zwischen einer Ablegeposition und einer Aufstellposition verstellbar ist. Ein als Netz ausgestaltetes Windschutzelement ist in der Aufstellposition des Oberrahmens gespannt und in der Ablegeposition des Oberrahmens ungespannt. Bei in Ablegeposition befindlichem Oberrahmen ist zwar ein unterhalb des Unterrahmens angeordneter Stauraum gut zugänglich, jedoch ist in dieser Ablegeposition das Windschutzelement lose und ungespannt, was im Betrieb zu Relativbewegungen und somit zu einer ungewünschten Geräuschentwicklung führen kann.

Es ist Aufgabe der Erfindung, eine Windschutzvorrichtung der eingangs genannten Art zu schaffen, die auch in der Ablegeposition des Oberrahmens Relativbewegungen des Windschutzelements unterdrückt und dabei gleichzeitig weiterhin eine Zugriffsmöglichkeit zum Stauraum unterhalb des Unterrahmens bietet.

Dieses Problem wird erfindungsgemäß durch eine Windschutzvorrichtung mit den Merkmalen des Anspruchs 1 gelöst.

Die Erfindung beruht auf dem allgemeinen Gedanken, die beiden Rahmen C-förmig auszubilden, im Bereich ihrer offenen Seiten aneinander zu lagern und mit diesen ein gemeinsames Windschutzelement aufzuspannen. Da die Rahmen einseitig offen sind, sind sie einfacher herstellbar als herkömmliche, allseits geschlossene Rahmen. Dementsprechend kann die erfindungsgemäße Windschutzvorrichtung preiswerter hergestellt werden. Des Weiteren ist ein Querträger vorgesehen, der sich zwischen den C-Schenkeln des Oberrahmens erstreckt und an diesen mit seinen Enden nahe oder in der Schwenkachse des Oberrahmens befestigt ist, wobei das Windschutzelement außerdem am Querträger befestigt ist. Durch diese Maßnahme ergibt sich die Möglichkeit, durch den Querträger eine gewünschte Raumform für das Windschutzelement in der Aufstellposition des Oberrahmens zu erzielen. Außerdem erhält das aufgespannte Windschutzelement dadurch eine höhere Formstabilität, so dass beispielsweise Relativbewegungen durch die Windbeaufschlagung reduziert werden können. Des Weiteren erhöht der Querträger die Steifigkeit der Windschutzvorrichtung. Der Querträger ist C-förmig ausgebildet, wobei seine offene Seite dem Oberrahmen zugewandt ist. Ferner ist der Querträger so dimensioniert und gegenüber dem Oberrahmen so geneigt, dass sich der am Querträger und am Unterrahmen angebrachte Abschnitt des Windschutzelements beim Verschwenken des Oberrahmens aus einem der Ablegeposition des Oberrahmens zugeordneten gespannten Zustand, über einen einer Zwischenposition des Oberrahmens zugeordneten entspannten Zustand in einen der Aufstellposition des Oberrahmens zugeordneten gespannten Zustand verstellt. Durch diese Maßnahme wird gewährleistet, dass das Windschutzelement sowohl in der Aufstellposition als auch in der Ablegeposition des Oberrahmens gespannt und somit relativ unempfindlich für Relativbewegungen, zum Beispiel durch Windbeaufschlagung, ist.

Entsprechend einer bevorzugten Ausführungsform kann das Windschutzelement so ausgebildet sein, dass es in einer Aufstellposition des Oberrahmens, in welcher der Oberrahmen nach oben vom Unterrahmen absteht, auf einer der Schwenkachse zugewandten Innenseite eine einfach oder mehrfach konkav gekrümmte Fläche aufweist. Durch diese Maßnahme wird auf der Innenseite des Windschutzelements ein Durchgriff auf den unterhalb des Unterrahmens angeordneten Raum ermöglicht. Insbesondere in dem Fall, in dem der Unterrahmen einen an die Frontsitzreihe anschließenden Stauraum abdeckt, ergibt sich somit auch bei installierter Windschutzvorrichtung eine einfache Zugriffsmöglichkeit auf diesen Stauraum.

Die räumliche Form des in der Aufstellposition des Oberrahmens aufgespannten Windschutzelements kann beispielsweise dadurch realisiert werden, dass das Windschutzelement in entsprechender Weise zugeschnitten ist und/oder dass in das Windschutzelement Bänder, Schnüre oder dergleichen eingebunden sind, die weniger Flexibilität aufweisen als das übrige Material des Windschutzelements, und/oder dass das Material des Windschutzelements in verschiedenen Richtungen unterschiedliche Elastizitäten besitzt.

Bei einer bevorzugten Ausführungsform kann der Oberrahmen in seiner Ablegeposition mit seiner Rückseite auf einer Oberseite des Unterrahmens aufliegen. Durch diese Maßnahme ergibt sich in der Ablegposition eine besonders raumsparende Unterbringung für die Windschutzvorrichtung.

Das Windschutzelement kann dann besonders formstabil aufgespannt werden, wenn es entsprechend einer speziellen Ausführungsform im wesentlichen entlang seines gesamten Umfanges an den Rahmen befestigt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf eine Windschutzvorrichtung nach der Erfindung bei einer Aufstellposition,
- Fig. 2: eine perspektivische Ansicht wie in Fig. 1, jedoch bei einer Ablegeposition,
- Fig. 3: eine Seitenansicht auf die Windschutzvorrichtung gemäß Fig. 1 und
- Fig. 4: eine Seitenansicht auf die Windschutzvorrichtung gemäß Fig. 2.

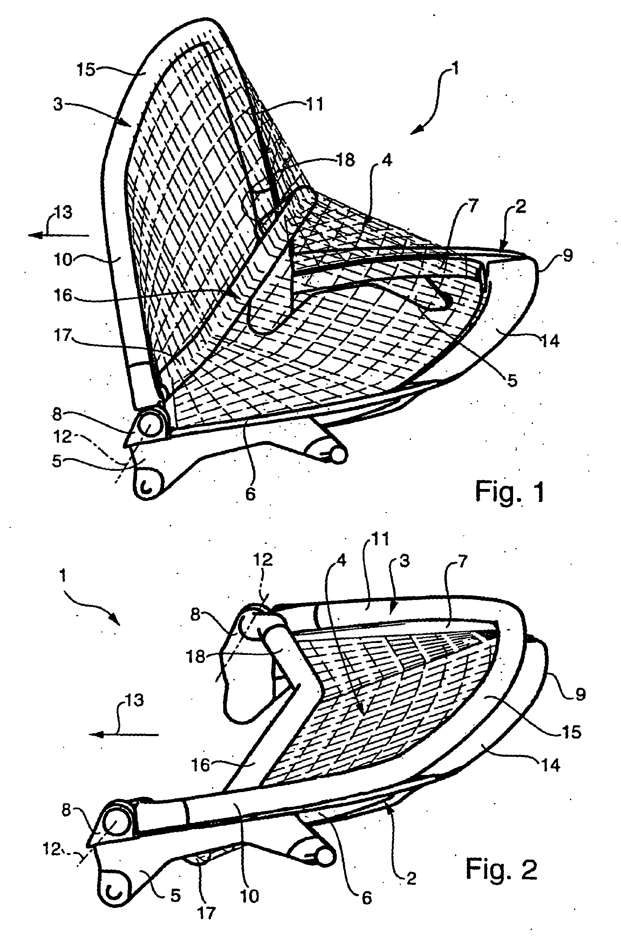

Entsprechend den Fig. 1 bis 4 weist eine erfindungsgemäße Windschutzvorrichtung 1 einen Unterrahmen 2, einen Oberrahmen 3 sowie ein Windschutzelement 4 auf.

Der Unterrahmen 2 weist an seiner Unterseite an jeder Seite Befestigungsmittel 5 auf, mit denen die Windschutzvorrichtung 1 an einem nicht dargestellten Kraftfahrzeug, insbesondere an einem offenen Personenkraftwagen (Cabriolet) befestigbar ist. Der Unterrahmen 2 ist C-förmig ausgebildet, so daß C-Schenkel 6 und 7 des Unterrahmens 2 an der offenen Seite des Unterrahmens 2 frei enden. An den freien Enden der C-Schenkel 6 und 7 ist an der Oberseite des Unterrahmens 2 an jeder Seite jeweils eine Lagerung 8 angeordnet, über die der Oberrahmen 3 am Unterrahmen 2 gelagert ist. Der Unterrahmen 2 ist vorzugsweise so dimensioniert, daß er einen Stauraum, der beim offenen Personenkraftwagen bezüglich der Fahrtrichtung nach hinten an eine Frontsitzreihe direkt anschließt, vollständig abdeckt. Der Unterrahmen 2 ist zu diesem Zweck mit einem seitlich vorstehenden Kragen 9 ausgestattet, der sich entlang des gesamten Unterrahmens 2 an dessen Außenseite erstreckt und der zur Auflage auf eine obere Einfassung des genannten Stauraums dient.

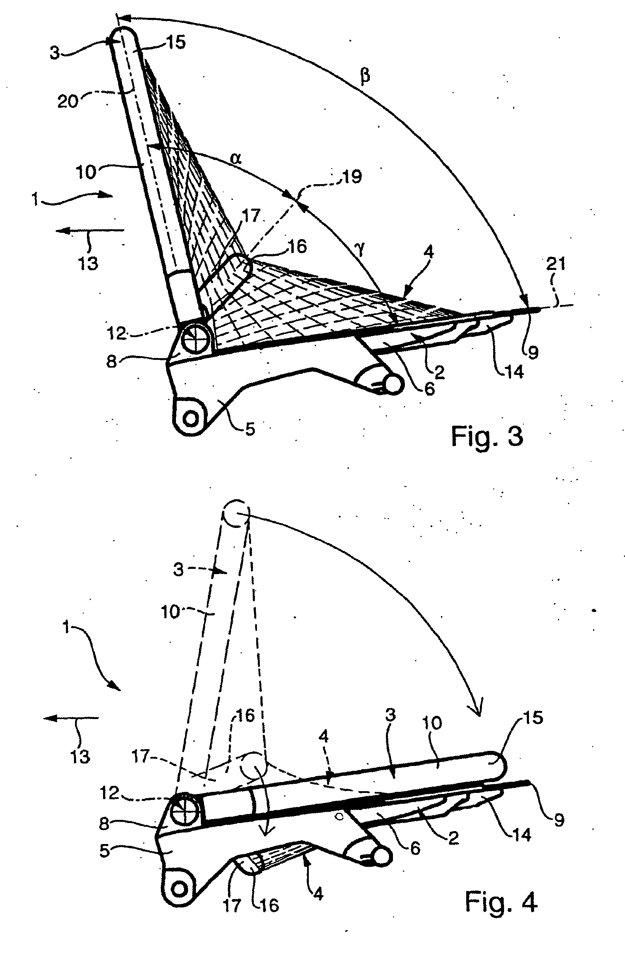

Der Oberrahmen 3 besitzt ebenfalls eine C-Form, wobei C-Schenkel 10 und 11 des Oberrahmens 3 an der offenen Seite des Oberrahmens 3 frei enden. Der Oberrahmen 3 ist an den freien Enden seiner C-Schenkel 10, 11 über die Lagerungen 8 um eine quer zu einer durch einen Pfeil symbolisierten Fahrtrichtung 13 verlaufende Schwenkachse 12 am Unterrahmen 9 schwenkbar gelagert. In den Fig. 1 und 3 ist eine Aufstellposition des Oberrahmens 3 wiedergegeben, in welcher er im wesentlichen senkrecht vom Unterrahmen 2 nach oben absteht. In dieser Aufstellposition des Oberrahmens 3 bietet die Windschutzvorrichtung 1 bei geöffnetem Verdeck des Cabriolets den gewünschten Windschutz. Wenn dieser Windschutz nicht benötigt wird, z.B. bei geschlossenem Verdeck, kann der Oberrahmen 3 um die Schwenkachse 12 bezüglich der Fahrtrichtung 13 nach hinten in eine Ablegeposition entsprechend den Fig. 2 und 4 verschwenkt werden. In dieser Ablegeposition liegt der Oberrahmen 3 mit seiner Rückseite auf der Oberseite des Unterrahmens 2 bündig auf. Bei der hier gezeigten Ausführungsform sind Oberrahmen 3 und Unterrahmen 2 außerdem so dimensioniert, daß der Oberrahmen 3 in seiner Ablegeposition etwa deckungsgleich auf dem Unterrahmen 2 aufliegt. Ein besonders raumsparender Nichtgebrauchszustand für die Windschutzvorrichtung 1 ergibt sich in der Ablegeposition des Oberrahmens 3 dadurch, daß sowohl der Unterrahmen 2 als auch der Oberrahmen 3 eben ausgebildet sind, so daß die Rahmen 2 und 3 in der Ablegeposition entlang ihrer C-Schenkel 6, 7 bzw. 10, 11 und insbesondere entlang ihrer jeweiligen C-Basis 14 bzw. 15 aneinander anliegen.

Um den Oberrahmen 3 zumindest in einer seiner Endpositionen (Aufstellposition und Ablageposition) und insbesondere auch in wenigstens einer Zwischenposition feststellen zu können, können entsprechende Fixiermittel, Rastmittel oder Arretiermittel vorgesehen sein.

Das Windschutzelement 4 besteht aus einem flexiblen und flächigen Material. Vorzugsweise ist das Windschutzelement 4 aus einem Gitter oder Netz oder aus einem sonstigen transparenten Gewebe gebildet. Das Windschutzelement 4 ist entlang seines gesamten Umfanges an den Rahmen 2 und 3 befestigt.

Das Windschutzelement 4 kann insbesondere aus einem gummieelastischen Material bestehen, um zumindest in der Aufstellposition eine straffe und gespannte Kontur einnehmen zu können. In der Aufstellposition des Oberrahmens 3 besitzt das Windschutzelement 4 eine besondere Raumform, die dadurch gekennzeichnet ist, daß eine der Schwenkachse 12 zugewandte Innenseite des Windschutzelements 4 zumindest eine einfach, hier jedoch eine mehrfach konkav gekrümmte Fläche aufweist. Durch diese Besonderheit ist der nicht gezeigte Stauraum unterhalb des Unterrahmens 2 vor allem bei in seine Aufstellposition aufgestelltem Oberrahmen 3 von vorn, also von der Innenseite des Windschutzelements 4 her gut erreichbar.

Diese dreidimensionale Form des Windschutzelements 4 in der Aufstellposition wird durch einen Querträger 16 ermöglicht, der sich zwischen den freien Enden der C-Schenkel 10, 11 des Oberrahmens 3 erstreckt und somit nahe der Schwenkachse 12 am Oberrahmen 3 befestigt ist. Außerdem ist dieser Querträger 16 an der Innenseite des Windschutzelements 4 angeordnet und dort fest mit dem Windschutzelement 4 verbunden. Durch eine entsprechende Formgebung und Positionierung des Querträgers 16 wird die gewünschte Raumform für das Windschutzelement 4 in der Aufstellposition des Oberrahmens 3 erreicht.

Alternativ dazu und nicht erfindungsgemäß kann diese gewünschte Raumform des Windschutzelements 4 grundsätzlich auch ohne einen solchen Querträger 16 erreicht werden, indem beispielsweise anstelle des Querträgers 16 ein Gummiband oder dergleichen am Windschutzelement 4 angebracht wird. Zusätzlich können der Zuschnitt sowie eine gezielte Orientierung der Elastizitäten im Material so gewählt werden, daß sich in der Aufstellposition des Oberrahmens 3 die gewünschte räumliche Wölbung des Windschutzelements 4 einstellt.

Neben der gezielten Raumform des Windschutzelements 4 bewirkt der Querträger 16 außerdem eine Versteifung der gesamten Windschutzvorrichtung 1, wodurch deren Stabilität erhöht ist. Der Querträger 16 ist C-förmig ausgebildet, wobei an seiner offenen Seite die freien Enden seiner C-Schenkel 17, 18 am Oberrahmen 3 befestigt sind. Der Querträger 16 steht an der dem Unterrahmen 2 zugewandten Rückseite des Oberrahmens 3 vom Oberrahmen 3 ab.

Entsprechend Fig. 3 liegt der Querträger 16 in einer Ebene 19, die auf einer von der Schwenkachse 12 abgewandten Seite mit einer Ebene 20, in welcher der Oberrahmen 3 liegt, einen spitzen Neigungswinkel α einschließt, der beispielsweise zwischen 40° und 60° betragen kann. Der Oberrahmen 3 steht in seiner Aufstellposition gemäß Fig. 3 mehr oder weniger senkrecht vom Unterrahmen 2 ab, so daß auf der Rückseite des Oberrahmens 3 und auf der Oberseite des Unterrahmens 2 zwischen der Ebene 20 des Oberrahmens 3 und einer Ebene 21, in welcher der Unterrahmen 2 liegt, ein Winkel β aufgespannt ist, der vorzugsweise zwischen 80° und 100° betragen kann. Durch die gewählte Neigung des Querträgers 16 und die gewünschte Aufstellposition des Oberrahmens 3 ergibt sich für den Querträger 16 in der Aufstellposition eine Orientierung, bei der die Ebene 19 des Querträgers 16 mit der Ebene 21 des Unterrahmens 2 einen spitzen Aufstellwinkel γ einschließt, der vorzugsweise ebenfalls zwischen 40° und 60° betragen kann.

In Fig. 4 ist der Oberrahmen 3 in seiner Ablegeposition mit durchgezogenen Linien dargestellt. Mit unterbrochenen Linien ist für den Oberrahmen 3 außerdem eine Zwischenposition eingezeichnet, die der Oberrahmen 3 bei einer Verstellung zwischen seiner Aufstellposition und seiner Ablegeposition einnimmt. Dabei ist beachtenswert, daß durch die gewählte Dimensionierung und durch die gewählte Neigung des Querträgers 16 ein am Querträger 16 und am Unterrahmen 2 befestigter Abschnitt des Windschutzelements 4 in dieser Zwischenposition einen entspannten Zustand besitzt, während das Windschutzelement 4 in der Ablegeposition entsprechend Fig. 4 und in der Aufstellposition entsprechend Fig. 3 jeweils einen gespannten Zustand aufweist. Das bedeutet, daß für das Windschutzelement 4 sowohl in der Aufstellposition als auch in der Ablegeposition des Oberrahmens 3 eine straffe Form gewährleistet werden kann, so daß beispielsweise störende Relativbewegungen des Windschutzelements 4 aufgrund einer Windbeaufschlagung unterdrückt werden können.

Durch den Querträger 16 wird auch in der Ablegeposition ein freier Durchgriff zu dem unterhalb des Unterrahmens 2 angeordneten Stauraum ermöglicht.

## Patentansprüche

1. Windschutzvorrichtung für ein Kraftfahrzeug, insbesondere für einen offenen Personenkraftwagen,
- mit einem Unterrahmen (2), der mit Befestigungsmitteln (5) am Fahrzeug befestigbar ist,
- mit einem Oberrahmen (3), der um eine Schwenkachse (12) am Unterrahmen (2) schwenkbar gelagert ist,
- mit mindestens einem flexiblen, flächigen Windschutzelement (4), das an den Rahmen (2,3) angebracht ist,
- wobei beide Rahmen (2,3) C-förmig ausgebildet und ihre offenen Seiten der Schwenkachse (12) zugewandt sind, und
- wobei für beide Rahmen (2,3) ein gemeinsames Windschutzelement (4) vorgesehen ist, das an beiden Rahmen (2,3) befestigt ist,
**dadurch gekennzeichnet,**
- **dass** ein Querträger (16) vorgesehen ist, der C-förmig ausgebildet ist,
- **dass** der Querträger (16) sich zwischen den C-Schenkeln (10,11) des Oberrahmens (3) erstreckt und an diesen mit seinen Enden nahe oder in der Schwenkachse (12) befestigt ist,
- **dass** das Windschutzelement (4) außerdem am Querträger (16) befestigt ist,
- **dass** der Querträger (16) so dimensioniert und gegenüber dem Oberrahmen (3) so geneigt ist, dass sich der am Querträger (16) und am Unterrahmen (2) befestigte Abschnitt des Windschutzelements (4) beim Verschwenken des Oberrahmens (3) aus einem der Ablegeposition des Oberrahmens (3) zugeordneten gespannten Zustand, über einen einer Zwischenposition des Oberrahmens (3) zugeordneten entspannten Zustand in einen der Aufstellposition des Oberrahmens (3) zugeordneten gespannten Zustand verstellt.

2. Windschutzvorrichtung nach Anspruch 1,
**dadurch gekennzeichnet,**
**dass** das Windschutzelement (4) so ausgebildet ist, dass es in einer Aufstellposition des Oberrahmens (3), in welcher der Oberrahmen (3) nach oben vom Unterrahmen (2) absteht, auf einer der Schwenkachse (12) zugewandten Innenseite eine einfach oder mehrfach konkav gekrümmte Fläche aufweist.

3. Windschutzvorrichtung nach Anspruch 1 oder 2,
**dadurch gekennzeichnet,**
**dass** die offene Seite des C-förmigen Querträgers (16) dem Oberrahmen (3) zugewandt ist.

4. Windschutzvorrichtung nach einem der Ansprüche 1 bis 3,
**dadurch gekennzeichnet,**
**dass** der Querträger (16) an einer dem Unterrahmen (2) zugewandten Rückseite des Oberrahmens (3) vom Oberrahmen (3) absteht.

5. Windschutzvorrichtung nach einem der Ansprüche 1 bis 4,
**dadurch gekennzeichnet,**
**dass** der Oberrahmen (3) in seiner Ablegeposition mit seiner Rückseite auf einer Oberseite des Unterrahmens (2) aufliegt.

6. Windschutzvorrichtung nach Anspruch 5,
**dadurch gekennzeichnet,**
**dass** die Rahmen (2,3) so dimensioniert und geformt sind, dass sie in der Ablegeposition des Oberrahmens (3) etwa deckungsgleich aufeinander liegen.

7. Windschutzvorrichtung zumindest nach Anspruch 3,
**dadurch gekennzeichnet,**
**dass** der Querträger (16) gegenüber dem Oberrahmen (3) geneigt ist, derart, dass der Querträger (16) in einer Seitenansicht auf der von der Schwenkachse (12) abgewandten Seite einen spitzen Neigungswinkel α mit dem Oberrahmen (3) einschließt.

8. Windschutzvorrichtung nach Anspruch 7,
**dadurch gekennzeichnet,**
**dass** die Neigung des Querträgers (16) und die Aufstellposition des Oberrahmens (3) so aufeinander abgestimmt sind, dass in der Aufstellposition der Querträger (16) in einer Seitenansicht auf der von der Schwenkachse (12) abgewandten Seite einen spitzen Aufstellwinkel γ mit dem Unterrahmen (2) einschließt.

9. Windschutzvorrichtung nach einem der Ansprüche 1 bis 8,
**dadurch gekennzeichnet,**
**dass** das Windschutzelement (4) aus einem elastischen Gitter oder Netz oder transparenten Gewebe besteht.

10. Windschutzvorrichtung nach einem der Ansprüche 1 bis 9,
**dadurch gekennzeichnet,**
**dass** das Windschutzelement (4) im Wesentlichen entlang seines gesamten Umfanges an den Rahmen (2,3) befestigt ist.

11. Windschutzvorrichtung nach einem der Ansprüche 1 bis 10,
**dadurch gekennzeichnet,**
**dass** der Unterrahmen (2) so dimensioniert ist, dass er einen bezüglich der Fahrtrichtung (13) nach hinten an eine Frontsitzreihe direkt anschließenden Stauraum vollständig abdeckt.

## Claims

1. Anti-buffet screen device for a motor vehicle, in particular for an open car,
- with a lower frame (2) which can be attached to the vehicle with fastening means,
- with an upper frame (3) pivotably mounted about a pivot axis (12) on the lower frame (2),
- with at least one flexible, planar ant-buffet element (4) secured to the frames (2, 3),
- wherein both frames (2, 3) are C-shaped and their open sides face the pivot axis (12), and
- wherein a common anti-buffet element (4) attached to both frames (2, 3) is provided for the two frames (2, 3),
**characterised in that**
- a C-shaped crossmember (16) is provided,
- the crossmember (16) extends between the C-legs (10, 11) of the upper frame (3) and is attached thereto by its ends near to or in the pivot axis (12),
- the anti-buffet element (4) is attached to the crossmember (16) as well,
- the crossmember (16) is dimensioned such and inclined with respect to the upper frame (3) such that the section of the anti-buffet element (4) which is attached to the crossmember (16) and to the lower frame (2) is transferred, while the upper frame (3) is pivoted, from a tensioned state assigned to the stored position of the upper frame (3) via a relaxed state assigned to an intermediate position of the upper frame (3) to a tensioned state assigned to the erected position of the upper frame (3).

2. Anti-buffet screen device according to claim 1,
**characterised in that**
the anti-buffet element (4) is designed such that that it has, in an erected position of the upper frame (3), in which the upper frame (3) projects upwards from the lower frame (2), a singly or multiply concave curvature.

3. Anti-buffet screen device according to claim 1 or 2,
**characterised in that**
the open side of the C-shaped crossmember (16) faces the upper frame (3).

4. Anti-buffet screen device according to any of claims 1 to 3,
**characterised in that**
the crossmember (16) protrudes from the upper frame (3) at a rear side of the upper frame (3) which faces the lower frame (2).

5. Anti-buffet screen device according to any of claims 1 to 4,
**characterised in that**
the upper frame (3) lies with its rear side on a top side of the lower frame (2) in its stored position.

6. Anti-buffet screen device according to claim 5,
**characterised in that**
the frames (2, 3) are dimensioned and shaped such that they lie on top of each other in an approximately congruent manner in the stored position of the upper frame (3).

7. Anti-buffet device according to at least claim 3,
**characterised in that**
the crossmember (16) is inclined with respect to the upper frame (3) such that the crossmember (16) encloses in a side view on the side remote from the pivot axis (12) an acute angle of inclination α with the upper frame (3).

8. Anti-buffet device according to claim 7,
**characterised in that**
the inclination of the crossmember (16) and the erected position of the upper frame (3) are matched to each other such that, in the erected position, the crossmember (16) encloses in a side view on the side remote from the pivot axis (12) an acute erection angle γ with the lower frame (2).

9. Anti-buffet screen device according to any of claims 1 to 8,
**characterised in that** the anti-buffet element (4) is made of an elastic grid or netting or of a transparent fabric.

10. Anti-buffet screen device according to any of claims 1 to 9,
**characterised in that**
the anti-buffet element (4) is attached to the frames (2, 3) substantially along its entire circumference.

11. Anti-buffet screen device according to any of claims 1 to 10,
**characterised in that**
the lower frame (2) is dimensioned such that it completely covers a stowage space directly adjoining the row of front seats on the rear with respect to the direction of travel (13).

## Revendications

1. Dispositif de protection contre le vent pour un véhicule automobile, en particulier pour une voiture particulière ouverte,
- avec un cadre inférieur (2), qui peut être fixé à l'aide de dispositifs de fixation (5) sur le véhicule,
- avec un cadre supérieur (3), qui est fixé de manière à pouvoir pivoter autour d'un axe de pivotement (12) sur le cadre inférieur (2),
- avec au moins un élément de protection contre le vent flexible et plan (4), qui est monté sur les cadres (2,3),
- les deux cadres (2,3) étant conçus sous forme d'un C et leurs cotés ouverts étant orientés vers l'axe de pivotement (12), et
- un élément de protection contre le vent commun (4) étant prévu pour les deux cadres (2,3), qui est fixé sur les deux cadres (2,3), **caractérisé en ce que**,
- une traverse (16) est prévue, qui est conçue en forme de C,
- que la traverse (16) s'étend entre les montants en forme de C (10,11) du cadre supérieur (3) et qu'elle est fixée sur ceux-ci avec ses extrémités à proximité ou dans l'axe de pivotement (12),
- que l'élément de protection contre le vent (4) est par ailleurs fixé sur la traverse (16),
- que la traverse (16) est dimensionnée et inclinée par rapport au cadre supérieur (3) de manière à ce que la partie de l'élément de protection contre le vent (4) fixée sur la traverse (16) et sur le cadre inférieur (2) se déplace lors du pivotement du cadre supérieur (3) d'un état tendu correspondant à une position de dépôt du cadre supérieure (3), en passant par un état détendu correspondant à une position intermédiaire du cadre supérieure (3) à un état tendu correspondant à une position d'appui du cadre supérieur (3).

2. Dispositif de protection contre le vent selon la revendication 1,
**caractérisé en ce que**
l'élément de protection contre le vent (4) est conçu de manière à ce que ledit élément comporte, dans une position d'appui du cadre supérieur (3), dans laquelle le cadre supérieur (3) est saillant vers le haut par rapport au cadre inférieur (2), sur la face intérieure orientée vers l'axe de pivotement (12), une surface courbée simplement concave ou double concave.

3. Dispositif de protection contre le vent selon les revendications 1 ou 2,
**caractérisé en ce que**,
le coté ouvert de la traverse en forme de C (16) est orienté vers le cadre supérieur (3).

4. Dispositif de protection contre le vent selon l'une quelconque des revendications 1 à 3,
**caractérisé en ce que**
la traverse (16) est, sur un coté arrière du cadre supérieur (3) faisant face au cadre inférieur (2), saillante par rapport au cadre supérieur (3).

5. Dispositif de protection contre le vent selon l'une quelconque des revendications 1 à 4,
**caractérisé en ce que**
le cadre supérieur (3) s'appuie dans la position de dépôt avec son coté arrière sur un coté supérieur du cadre inférieur (2).

6. Dispositif de protection contre le vent selon la revendication 5,
**caractérisé en ce que**
les cadres (2,3) sont dimensionnés et formés de manière à ce que lesdits cadres congruent approximativement dans la position de dépôt du cadre supérieur (3).

7. Dispositif de protection contre le vent selon au moins la revendication 3,
**caractérisé en ce que**
la traverse (16) est inclinée par rapport au cadre supérieur (3) de manière à ce que la traverse (16) forme, dans une vue latérale, sur le coté détourné de l'axe pivotant (12) un angle aigu d'inclinaison α avec le cadre supérieur (3).

8. Dispositif de protection contre le vent selon la revendication 7,
**caractérisé en ce que**
l'inclinaison de la traverse (16) et la position d'appui du cadre supérieur (3) sont coordonnées de manière à ce que, dans la position d'appui la traverse (16) forme, dans une vue latérale, un angle d'appui y sur le coté détourné de l'axe de pivotement (12) avec le cadre inférieur (2).

9. Dispositif de protection contre le vent selon l'une quelconque des revendications 1 à 8,
**caractérisé en ce que**
l'élément de protection contre le vent (4) est composé d'un treillis élastique ou d'un filet ou d'un tissu transparent.

10. Dispositif de protection contre le vent selon l'une quelconque des revendications 1 à 9,
**caractérisé en ce que**
l'élément de protection contre le vent (4) est fixé essentiellement au long de sa périphérie totale sur les cadres (2,3).

11. Dispositif de protection contre le vent selon l'une quelconque des revendications 1 à 10,
**caractérisé en ce que** le cadre inférieur (2) est dimensionné de manière à ce qu'il couvre entièrement, par rapport au sens de circulation (13), un espace de stockage rattaché directement vers l'arrière à une travée de siège frontale.
